# EUROPEAN PATENT SPECIFICATION

(11) **EP 1 977 471 B1**
(45) Date of publication and mention of the grant of the patent: **23.02.2011**
(21) Application number: 06828290.4
(22) Date of filing: 11.12.2006
(51) Int. Cl.: H01M 8/04

(54) **FUEL CELL SYSTEM AND CONTROL METHOD THEREOF**
BRENNSTOFFZELLENSYSTEM UND STEUERVERFAHREN DAFÜR
SYSTEME DE PILE A COMBUSTIBLE ET PROCEDE ASSOCIE

(30) Priority: 13.12.2005 CN 200510130521
(43) Date of publication of application: 08.10.2008
(73) Proprietor: Byd Company Limited, Guangdong Province 518119 (CN)
(72) Inventor: DONG, Junqing, Shenzhen 518118 (CN); ZHOU, Yong, Shenzhen 518118 (CN)
(74) Representative: Karlsson, Leif Gunnar Börje
(86) International application number: PCT/CN2006/003367
(87) International publication number: WO 2007/068196

(56) References cited:
- CN-A- 1 536 699
- JP-A- 01 038 969
- JP-A- 11 111 318
- JP-A- 2004 095 527
- JP-A- 2005 071 778
- US-A1- 2005 118 470
- US-B1- 6 472 090

## Description

### TECHNICAL FIELD

The present invention relates to a fuel cell system and the control method thereof.

### BACKGROUND

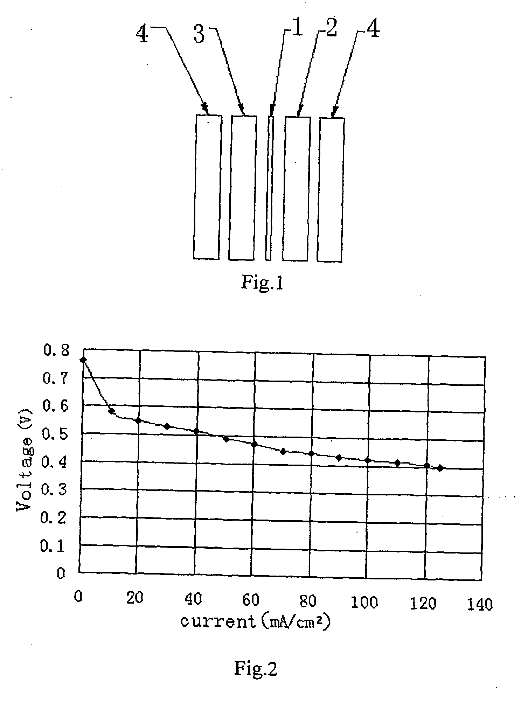

Fuel cells are devices that convert chemical energy into electric energy directly, featured with advantages including high efficiency, low pollution, and low noise, etc. Fuel cells can be individual fuel cells or fuel cell stacks comprising multiple individual fuel cells. As shown in Fig. 1, a fuel cell generally comprises proton exchange membrane 1, anode 2, cathode 3, and guide plate 4. In organic fuel cell systems, air or oxygen is usually used as the oxidant, and an organic substance such as methanol, formic acid, or alcohol is used as the fuel. For example, in a fuel cell system with air as the oxidant and methanol as the fuel, the following reactions occur during the electrochemical reactions:

Anode CH₃OH+H₂O→CO₂+6H⁺+6e (1)

Cathode 3/2O₂+6H⁺+6e→3H₂O (2)

The reactions between anode and cathode cause the following general reaction:

CH₃OH+3/2O₂→CO₂+2H₂O (3)

It is seen from the equation (1): at the anode 2, methanol diffuses through the diffusion layer to the catalyst layer and performs the electrochemical reaction to create CO₂, H⁺, and electrons. It is seen from equation (2): the electrons created at anode 2 pass through the guide plate 4 and the external conductor outside the anode 2, and finally the electrons are captured by the cathode 3. The protons created at anode 2 pass through the proton exchange membrane 1 to the cathode 3 directly, so that the current is formed.

The fuel/gas supply in existing fuel cells is mainly classified into two forms: passive and active.

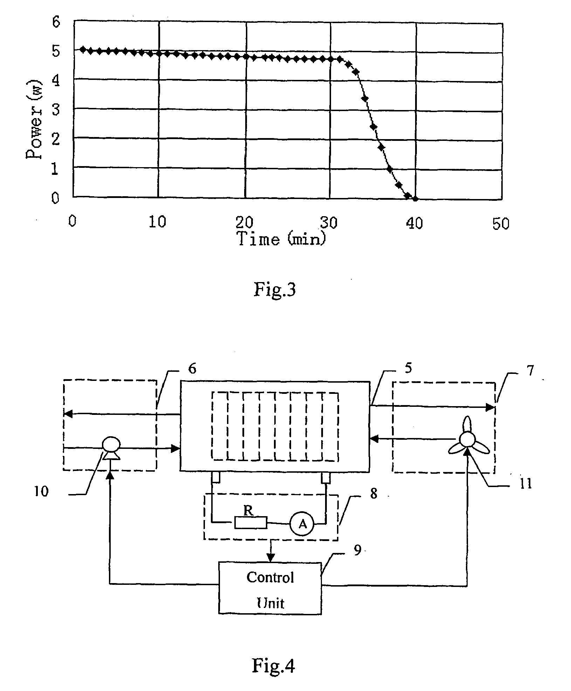

The passive fuel/gas supply refers to supply fuel and oxidant gas to the two electrodes of fuel cell through fuel-supply tube and gas-supply tube by using concentration diffusion principle. However, due to the fact that the accumulated products CO₂ and H₂O produced during the reaction can't be transferred away timely, they hinder the diffusion of fuel and oxidant gas to the catalyst layer; in addition, as the reaction continues, the concentration of reactants near the reaction area becomes lower than lower, blocking diffusion of reactants and products; all of those factors make the output power of fuel cell very unstable and then the, performance will be degraded. Fig.2 is a curve chart of output voltage vs. current in the fuel cell shown in Fig. 1; and Fig.3 is the curve chart of output power vs. time in a fuel cell stack composed of 10 stacked individual fuel cells shown in Fig. 1 in the manner of passive gas/fuel supply. It is seen from the drawings that the output power is not stable, and, as the time goes, the discharge current becomes smaller and smaller, and the power becomes lower and lower. Therefore, in order to obtain higher output power, more reactants and oxidant have to be transferred actively, i.e., active manner.

The active gas/fuel supply refers to the device that is used to transfer fuel and oxidant actively, and, more specifically, refers to add fuel pump and air compressor or fan in the fuel cell system.

For instance, patent application CN1567630A discloses a fuel cell, in which a fuel supply tube to supply fuel and a fuel return tube to recover the fuel after reaction are connected to the anode of the generator, and an air supply tube to supply air and an air exhaust tube to exhaust the air after reaction are connected to the cathode of the generator; in that fuel cell, electricity is generated by the electrochemical oxidation reaction at anode and the electrochemical reduction reaction at cathode; the performance regulating devices include: a voltmeter for measuring the output voltage of said generator and a controller for comparing the measured voltage value with the specified value and thereby detect any abnormality or for regulating the performance. Furthermore, a fuel pump for pumping fuel is mounted on the fuel supply tube and an air compressor for pumping air is mounted on the air supply tube.

US 6,472,090 discloses an electrochemical fuel cell that is operated with periodic reactant starvation at either or both electrodes.

US 2005/0118470 discloses a fuel cell power generating device comprising an electromotive unit which is formed by stacking a membrane electrode assembly which is enclosing an electrolyte film with an anode electrode and a cathode electrode and generates electrical power.

Above fuel cell system and control method thereof control the supply volume of fuel and air in accordance with the voltage of the fuel cell; however, as described above, the voltage change of fuel cell is not a direct parameter that reflects the actual situation of the chemical reaction process in the fuel cell; therefor, the method of controlling fuel/air supply in accordance with the voltage of the fuel cell is apparently not directly effective enough, and can't delivery proactively control result, and thereby is not scientific.

Furthermore, above fuel cell system with active fuel/air supply and the control method thereof have two additional drawbacks: in one aspect, the external fuel pump and air compressor/fan will consume a large amount of power when they operate, resulting in low output efFiciency of the fuel cell; in another aspect, the fuel pump and air compressor/fan have, a very short service life under the continuous operation condition.

### SUMMARY OF THE INVENTION

In view of the drawbacks in existing fuel cell systems with active fuel/air supply and the control method thereof as described above, such as indirect and inefficient control and short service life, the present invention provides a fuel cell system with direct and effective control, high output efficiency, and long service life as well as a control method of said fuel cell system,

The inventor has found that the direct parameter that reflects the actual situation of reaction in fuel cell is the magnitude of the discharge current. It is seen from above equations (1), (2) and (3): when there is more methanol involved in the reaction at the anode 2, the discharge current output from the fuel cell is higher (i.e., more electrons are produced); however, when there is less methanol involved in the reaction at the anode 2, the discharge current output from the fuel cell is lower (i.e., fewer electrons are produced). It is obvious that the value of discharge current depends directly on the amount of reactant. Similarly, at the cathode 3, the discharge current output from the fuel cell also directly depends on the amount of the oxidant. Therefore, a fuel cell system in which the discharge current is directly associated to the fuel and air used and the control method for said fuel cell system are more direct and effective.

The fuel cell system provided in the present invention comprises: a fuel cell generator, a fuel supply unit, a gas supply unit, a detection unit and a control unit; said fuel supply unit and gas supply unit are connected to the anode inlet and cathode inlet of the fuel cell generator respectively; said detection unit is connected to the two electrodes of the fuel cell generator and is for detecting the discharge parameter of said fuel cell generator; said control unit is connected to the fuel supply unit, the gas supply unit, and the detection unit, respectively, and is for controlling fuel supply of said fuel supply unit and gas supply of said gas supply unit in accordance with the discharge parameter detected by said detection unit; wherein, said detection unit is a current detection device; said discharge parameter of the fuel cell generator detected by said detection unit is the discharge current value.

The control method for fuel cell system provided in the present invention comprises the following steps: detecting the discharge parameter of fuel cell generator in the fuel cell system; controlling fuel supply of the fuel supply unit and gas supply of the gas supply unit in accordance with the detected discharge parameter; wherein, said detected discharge parameter of the fuel cell generator is the discharge current value.

The fuel cell system and the control method thereof provided in the present invention improves the existing fuel cell systems with active fuel/gas supply and the control method thereof; it utilizes the discharge current value output from the fuel cell generator as the main discharge parameter to control the fuel supply unit/gas supply unit. Compared to the system and control method that control the fuel supply unit/gas supply unit by detecting the discharge voltage of the fuel cell generator, the fuel cell system and the control method thereof are more direct and effective in control and delivers a proactive control effect, and can avoid hindering to diffusion of the reactant and the products. The fuel cell system and the control method in a preferred embodiment of the present invention can also control the working duration within a working cycle of the fuel supply unit/gas supply unit in accordance with the discharge current, i.e., the working duration will be longer and the idle duration will be shorter if the discharge current is high; the working duration will be shorter and the idle duration will be longer if the discharge current is low. Therefore, the fuel supply unit/gas supply unit can operate intermittently; in addition, the intermittent-operation can be associated to the discharge current output from the fuel cell. In that way, the fuel and oxidant can supplied as appropriate to match the discharge current; as the result, the drawback that the fuel supply unit/gas supply unit still consume a great deal energy and thereby result in inefficiency when the discharge current is small can be prevented, and the fuel cell can output stably at a higher power. Furthermore, the present invention is low in cost and easy to implement; therefore, it is of great significance to organic fuel cells for small electronic products.

### BRIEF DESCRIPTION OF THE DRAWINGS

Fig.1 is a schematic diagram of the structural composition of an individual fuel cell;
Fig.2 is a curve chart of output voltage vs. current of an individual fuel cell with, passive fuel/gas supply;
Fig.3 is a curve chart of output power vs. time of a fuel cell stack with passive fuel/gas supply;
Fig.4 is a block diagram of the fuel cell system provided in the present invention;
Fig.5 is a curve chart of the relationship between the discharge current and working duration of the fuel cell system provided in the present invention;
Fig.6 is a flow diagram of the control method for the fuel cell system described in the present invention;
Fig.7 shows the curve of output power vs. time of fuel cell system A in a comparative example 1;
Fig.8 shows the curve of output power vs. time of fuel cell system B in example 1;
Fig.9 shows the curve of output power vs. time of fuel cell system C in example 2.

### DETAILED DESCRIPTION OF THE INVENTION

The fuel cell system and the control method provided in the present invention will be further described with reference to the accompany drawings.

As shown in Fig.4, the fuel cell system provided in the present invention comprises: a fuel cell generator 5, a fuel supply unit 6, a gas supply unit 7, a detection unit 8 and a control unit 9; said fuel supply unit 6 and gas supply unit 7 are connected to the anode inlet and cathode inlet of the fuel cell generator 5 respectively; said detection unit 8 is connected to the two electrodes of the fuel cell generator 5 and is for detecting the discharge parameter of said fuel cell generator 5; said control unit 9 is connected to the fuel supply unit 6, the gas supply unit 7, and the detection unit 8, respectively, and is for controlling fuel supply of said fuel supply unit 6 and gas supply of said gas supply unit 7 in accordance with the discharge parameter detected by said detection unit 8; wherein, said detection unit 8 is a current detection device; said discharge parameter of the fuel cell generator 5 detected by said detection unit 8 is the discharge current value.

Said fuel cell generator 5 is a individual fuel cell or fuel cell stack; said fuel cell stack is composed of multiple stacked individual fuel cell; said fuel cell generator 5 further comprises fuel cell reaction electrodes, electrode plates with flow channels designed to transfer oxidant gas and fuel, and current guide devices, which are comprised in conventional fuel cell generators; the structures of those devices are known to those-skilled in the art.

Said fuel supply unit 6 comprises a fuel pump 10, a fuel supply tube and a fuel return tube (shown as arrowed straight lines in Fig.4); said fuel supply tube and fuel return tube are connected to the anode inlet of said fuel cell generator 5; said fuel pump 10 is mounted on said fuel supply tube to pump fuel to said fuel cell generator 5. Said fuel pump 10 can be any pump that can drive fluids. Said fuel supply tube and fuel return tube are connected to a fuel tank (not shown) to supply and recover fuel.

Said gas supply unit 7 comprises a gas pump 11, a gas supply tube, and a gas exhaust tube (shown as arrowed straight lines in Fig.4); said gas supply tube and gas exhaust tube are connected to the cathode inlet of said fuel cell generator 5; said gas pump 11 is mounted on the gas supply tube to pump oxidant gas to said fuel cell generator 5. Said gas pump 11 can be an air compressor or fan. Said gas supply tube is connected to a gas storage tank (not shown) or directly connected to air to supply oxidant gas; said gas exhaust tube can recover or exhaust the gas.

Said detection unit 8 can be an ohmmeter and Ampere-meter coupled in series, as shown in Fig.4, or any device that can detect current, such as a current sensor, etc. Said detection unit 8 is connected to the discharge output end of the fuel cell generator 5 in parallel, to detect the discharge current value from said fuel cell generator 5 and send said discharge current value to the control unit 9.

Said control unit 9 comprises a signal receiver module, a time decision module, a timing module, a fuel-supply control module, and a gas-supply control module. Said signal receiver module is designed to receive the signals from the detection unit 8, determine the discharge current value in accordance with the signals, and send said discharge current value to the time decision module; said time decision module is designed to decide the scheduled working duration and scheduled idle duration in accordance with the received discharge current value, and send the two to the timing module; said timing module is designed to perform timing for the working duration and idle duration for the fuel supply unit 6/gas supply unit 7, and, if the working duration or idle duration of said fuel supply unit 6/gas supply unit 7 exceeds the scheduled working duration or scheduled idle duration, send a signal to the fuel supply control module/gas supply control module to indicate the scheduled working duration or scheduled idle duration has ended; said fuel-supply control module and gas-supply control module are designed to control fuel supply of the fuel supply unit 6 and gas supply of the gas supply unit 7 in accordance with the signal received from the timing module. Specifically, the timing module performs timing for the working duration and idle duration of fuel pump 10/gas pump 11. The fuel-supply control module and the gas-supply control module control the working state of fuel pump 10 and gas pump 11 respectively; if the fuel-supply control module/gas-supply control module receives a signal indicating the scheduled working duration has ended, the fuel-supply control module/gas-supply control module will stop the fuel pump 10/gas pump 11; if the fuel-supply control module/gas-supply control module receives a signal indicating the scheduled idle duration has ended, the fuel-supply control module/gas-supply control module will start fuel pump 10/gas pump 11.

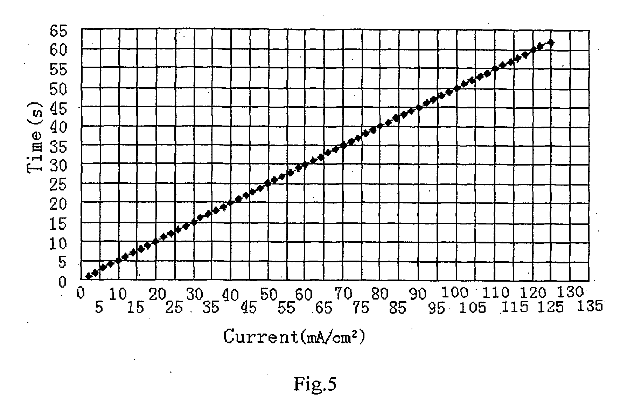

Specifically, said time decision module decides the scheduled working duration and scheduled idle duration in accordance with the present discharge current value determined by the signal receiver module and sends the data to the timing module. Wherein, said scheduled working duration and scheduled idle duration are decided with a specific strategy, depending on the specific purpose of the fuel cell; for instance, with the curve shown in Fig.5, the working cycle time is specified first, and then the corresponding scheduled working time is decided on the drawing in accordance with the specific discharge current value, and then the scheduled working duration is subtracted from the working cycle time to obtain the scheduled idle duration. In that way, the working duration of the fuel supply unit 6/gas supply unit 7 in a working cycle can be controlled depending on the discharge current; the higher the discharge current is, the longer the scheduled working duration will be, and the shorter the scheduled idle duration will be; the lower the discharge current is, the shorter the scheduled idle time will be, and the longer the scheduled working duration will be. Therefore, the fuel supply unit 6/gas supply unit 7 can operate intermittently and provide fuel and oxidant matching the discharge current, so as to overcome the drawback that the active electric fuel/gas supply device in fuel supply unit 6/gas supply unit 7 consumes a great deal of energy and results in inefficiency. Those skilled in the art should be aware that the precedence between working duration and idle duration in a working cycle is free, i.e., "idle" follows "working", or "working" follows "idle".

In above technical scheme, the time decision module can decide new scheduled working duration and new scheduled idle duration in real time in accordance with the present discharge current value; however, usually the operation of the system is controlled with the new schedule working duration and idle duration after one or several working cycles. If the present discharge current value doesn't change from the previous discharge current value, to save procedures, it is unnecessary to decide new scheduled working duration and new idle duration; instead, the entire system can still operate with the previous scheduled working duration and idle duration. In that case, said control unit 9 preferably further comprises a first current comparator module designed to judge whether the present discharge current value determined and sent by said signal receiver module is equal to the previous discharge current value, and, if the present discharge current value is different from the previous discharge current value, send the present discharge current value to the time decision module; if the present discharge current value is equal to the previous discharge current value, maintain the scheduled working duration and scheduled idle duration decided previously by the time decision module, i.e., the time decision module doesn't need to decide new scheduled working duration and new scheduled idle duration, instead, the entire system will operate in the same manner as it did in the previous working cycle.

Furthermore, if the discharge current value is equal to 0, it indicates the fuel cell generator 5 has discharged completely, and the fuel and gas supply has to be stopped. Therefore, said control unit 9 preferably further comprises a second current comparator module designed to judge whether the discharge current value determined and sent by said signal receiver module is equal to zero, and, if said discharge current value is equal to zero, notify directly said fuel-supply control module and gas-supply control module to stop fuel supply of said fuel supply unit 6 and gas supply of said gas supply unit 7; if the discharge current value is not equal to zero, send the discharge current value to said time decision module, so that said time decision module can decide the scheduled working duration and scheduled idle duration in accordance with said discharge current value.

Those skilled in the art should understand that the execution sequence between said first current comparator module and said second current comparator module can be reversed, without affecting the judgment result. For instance, whether the present discharge current value is different from the previous discharge current value can be judged first; if the present discharge current value is different, whether the present discharge current value is equal to 0 can be judged then; if the present discharge current value is equal to 0, the fuel and gas supply can be stopped; otherwise the present discharge current value is sent to the time decision module; if the present discharge current value is equal to the previous discharge current value, the previous scheduled working duration and idle duration are maintained. Or, whether the present discharge current value is equal to 0 can be judge first; if the present discharge current value is equal to 0, whether the present discharge current value is different from the previous discharge current value can be judged then; if the present discharge current value is different, the present discharge current value can be sent to the time decision module; otherwise the previously decided scheduled working duration and idle duration can be maintained.

Certainly, those skilled in the art can understand that the first current comparator module and the second current comparator module can be integrated in the signal receiver module.

Said timing module can comprise multiple timers with presetted times to perform timing for the working duration and idle duration of the fuel supply unit 6 as well as the working duration and idle duration of the gas supply unit 7, respectively. Said time decision module utilizes the decided scheduled working durations and idle durations as the presetted times for the timers, so that whenever the time counted by a timer exceeds the presetted time, the timer will send a signal indicating the scheduled working duration/scheduled idle duration has ended; whenever said signal is sent, the timer will reset to zero.

Said fuel-supply control module and gas-supply control module can control start/stop of fuel pump 10 and gas pump 11 respectively, as described above; when said fuel pump 10 and gas pump 11 start, fuel/gas will be supplied actively; when said fuel pump 10 and gas pump 11 stop, the system enter into idle mode, and fuel/gas can be supplied passively. Furthermore, the fuel supply volume from said fuel supply unit 6 and the gas supply volume from said gas supply unit 7 can also be controlled. That is to say, said fuel-supply control module and gas-supply control module can control said fuel pump 10 and gas pump 11 to supply fuel and gas at a constant rate or a variable rate. The "constant rate" refers that the supply rate of fuel/gas is constant; i.e., for electric fuel pump 10 or gas pump 11, the power is constant; the "variable rate" refers that the supply rate of fuel/gas is variable, depending on the discharge current value; i.e., the higher the discharge current value is, the higher the supply rate will be; the lower the discharge current value, the lower the supply rate will be; for electric fuel pump 10 or gas pump 11, the power is variable.

The control method for fuel cell system provided in the present invention comprises the following steps: detecting the discharge parameter of fuel cell generator 5 in the fuel cell system; controlling fuel supply of the fuel supply unit 6 and gas supply of the gas supply unit 7 in accordance with the detected discharge parameter; wherein, said detected discharge parameter of the fuel cell generator 5 is the discharge current value.

Wherein, in said method, the step that controlling the fuel supply of said fuel supply unit 6 and the gas supply of said gas supply unit 7 in accordance with the detected discharge parameter comprises the following steps: a signal receiving step, for receiving the detected discharge current value from said fuel cell generator 5 and determining said discharge current value; a time decision step, for deciding the scheduled working duration and scheduled idle duration in accordance with said discharge current value; a timing step, for timing for working duration and idle duration of said fuel supply unit 6/gas supply unit-7, and, when the working duration or idle duration of said fuel supply unit 6/gas supply unit 7 exceeds the scheduled working duration or scheduled idle duration, notifying said fuel-supply control module/gas-supply control module of the scheduled working duration or scheduled idle duration has ended; a fuel-supply control step and a gas-supply control step, for controlling fuel supply of said fuel supply unit 6 and gas supply of said gas supply unit 7 respectively in accordance with the signal indicating the scheduled working duration or scheduled idle duration has ended; specifically, controlling start/stop of said fuel pump 10 and gas pump 11. Refer to above detail description of the modules in the control unit 9 for the steps.

In the case of the control unit 9 in the fuel cell system comprises said first current comparator module, the step that controlling the fuel supply of said fuel supply unit 6 and the gas supply of said gas supply unit 7 in accordance with the detected discharge parameter in said method further comprises the following step: a first current comparison step, for judging whether the present discharge current value determined in the signal receiving step is equal to the previous discharge current value, and, if the present discharge current value is different from the previous discharge current value, deciding the scheduled working duration and scheduled idle duration in accordance with the present discharge current value in the time decision step; if the present discharge current value is equal to the previous discharge current value, maintaining the scheduled working duration and scheduled idle duration decided in the time decision step.

In the case of the control unit 9 in the fuel cell system comprises said second current comparator module, said step that controlling the fuel supply of said fuel supply unit 6 and the gas supply of said gas supply unit 7 in accordance with the detected discharge parameter in the method further comprises the following step: a second current comparison step, for judging whether the discharge current value determined in the signal receiving step is equal to 0, and, if the discharge current value is 0, notifying directly said fuel-supply control module and gas-supply control module to stop fuel supply of said fuel supply unit 6 and gas supply of said gas supply unit 7; if the discharge current value is not equal to 0, deciding the scheduled working duration and scheduled idle duration in accordance with the discharge current value in the time decision step.

Likewise, the execution sequence between said first current comparison step and said second current comparison step can be reversed, without affecting the normal operation.

In above fuel-supply control step and gas-supply control step, not only the start/stop of fuel pump 10 and gas pump 11 can be controlled, but also the fuel supply volume from said fuel supply unit 6 and the gas supply volume from said gas supply unit 7 can be controlled, i.e., the fuel pump 10 and the gas pump 11 are controlled to supply fuel and gas at a constant rate or variable rate.

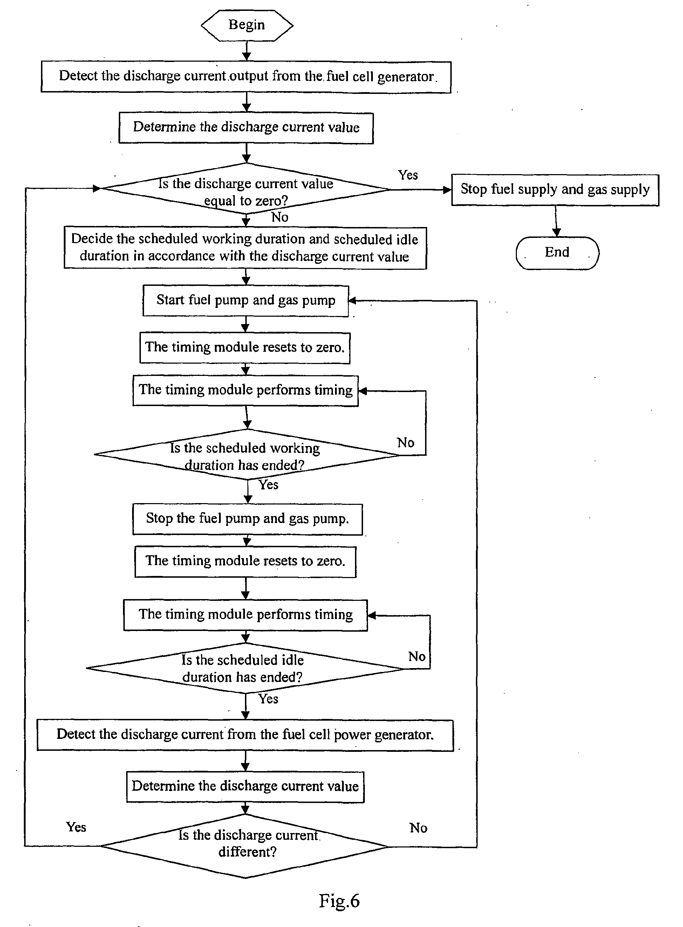

Hereunder the operation of the fuel cell system and the process flow of the control method provided in the present invention will be described, with reference to the accompanying Fig.6. It is noted that the process flow is only an embodiment; wherein, some preferred steps can be replaced as required, for example, the execution times of the first comparison step and the second comparison step can be exchanged.

As shown in Fig.6, first, the detection unit 8 detects the discharge current value from the fuel cell generator 5, and sends the detected signal to the signal receiver module of the control unit 9 to determine the discharge current value. Then, as shown in Fig.6, in the second comparison step, judge whether the discharge current value is equal to 0; before the fuel cell discharges completely, i.e., the discharge current is not equal to 0, the time decision module of control unit 9 decides the scheduled working duration and scheduled idle duration in accordance with said discharge current value; for example, the durations can be determined with the curve shown in Fig.5 or with other formulae. When the fuel cell discharges completely, the discharge current value will be 0, and the fuel supply and gas supply shall be stopped. The fuel-supply control module and gas-supply control module in control unit 9 start fuel pump 10 and gas pump 11 to supply fuel and oxidant gas actively to the fuel cell generator 5; at the same time, the timing module resets to zero and begins timing for the working duration. At the end of the scheduled working duration, the fuel-supply control module and the gas-supply control module will stop fuel pump 10 and gas pump 11; at the same time, the timing module resets to zero, and begin timing for the idle duration; once the scheduled idle duration is passed, a working cycle will end, and the discharge current is detected and the discharge current value is determined again. Now, the first comparison step can be executed to judge whether the present discharge current value is equal to the previous discharge current value; if the present discharge current value is equal to the previous discharge current value, the fuel cell system will be operate with the previously decided scheduled working duration and scheduled idle duration, i.e., the fuel-supply control module and the gas-supply control module will start the fuel pump 10 and gas pump 11 in accordance with the signal indicating the scheduled idle duration has ended; if the present discharge current value is different from the previous discharge current value, the scheduled working duration and scheduled idle duration will be redecided in the time decision module in accordance with the present discharge current value, and the above steps are repeated, till the fuel cell discharges completely, i.e., the discharge current is zero.

Therefore, it is seen that the fuel cell system provided in the present invention utilizes the control method to control the fuel supply unit 6/gas supply unit 7 to work intermittently in accordance with the discharge current value. The higher the discharge current output from the fuel cell generator 5 is, the longer the working duration of fuel pump 10 and gas pump 11 will be, and the shorter the idle duration will be, and thereby the more the fuel and oxidant gas conveyed will be; in contrast, the lower the discharge current output from the fuel cell generator 5 is, the shorter the working duration will be, and the longer the idle duration will be; therefore, the method can avoid unnecessary power consumption of fuel pump 10 and gas pump 11 and improve working efficiency.

Hereunder the invention will be further detailed in the example.

### Comparative example 1

The example is used to describe the existing fuel cell systems.

A fuel cell system A is constructed with reference to the fuel cell system disclosed in China patent application CN1567630A.

Wherein, the fuel cell generator is a fuel cell stack composed of 10 stacked individual fuel cell layers, with rated output power and rated current as 5W and 125mA, respectively. Each individual fuel cell is constructed in the structure shown in Fig.1, with effective active area as 10cm². A brush-less micro pump available in the market is used as the fuel pump, with 3V working current and 0.1A working current; 2mol/l methanol at 0.051/min flow rate is used as the fuel. A micro air compressor available in the market is used as the gas pump, with 3V working voltage and 0.1A working current; air at 0.1 standard atmospheric pressure and 0.51/min flow rate is used as the oxidant gas. Said fuel pump and air compressor work in constant flow mode.

### Example 1

The example is used to describe the fuel cell system provided in the present invention.

The devices are constructed as indicated in the comparative example 1; however, the difference is: a fuel cell system B is constructed as shown in Fig.4. Wherein, the discharge current from the fuel cell generator is constant at 125mA/cm²; the working cycle is set to 30 minutes; as indicated on the curve in Fig.5, the scheduled working duration is 60 seconds and the scheduled idle time is 29 minutes corresponding to the current value 125mA/cm².

### Example 2

The example is used to describe the fuel cell system provided in the present invention.

A fuel cell system C is constructed as described in embodiment 1. However, the difference is: the discharge current from the fuel cell generator is constant at 60mA/cm²; the working cycle is set to 30 minutes; as indicated on the curve in Fig.5, the scheduled working duration is 30 seconds and the scheduled idle time is 29 minutes and 30 seconds corresponding to the current 60mA/cm².

Hereunder the characteristics of the fuel cell system provided in the present invention will be described in the next example.

### Example 3

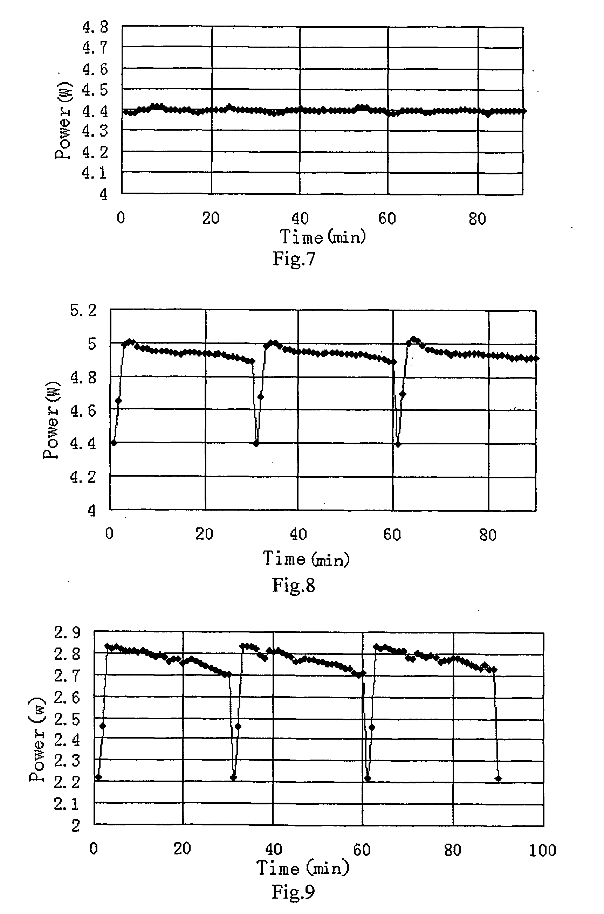

The output power of fuel cell systems A, B, and C are measured with an electronic load instrument respectively, and the curves of output power vs. time are drawn, as shown in Fig.7, 8, and 9 respectively.

As shown in Fig.7, the output power of fuel cell system A is about 4.4W, which is the net output power obtained by subtracting the power consumed by the fuel pump and the air compressor from the output power of the fuel cell generator. It is seen that though such an active fuel/gas supply approach can maintain long-time stable output, the output power is not high due to the consumption of the system itself.

As shown in Fig.8, the output power of fuel cell system B varies by a 30 minutes cycle, and the output power is stable within the range of 4.9W-SW in most of the time (about 2.8 minutes).

Likewise, as shown in Fig.9, the output power of fuel cell system C varies by a 30 minutes cycle, and the output power is stable within the range of 2.7W-2.8W in most of the time (about 28 minutes).

Therefore, it is seen from Fig.7-9 that the fuel cell system provided in the present invention can ensure higher output power in a long time; in addition, the energy consumption is reduced because the fuel supply unit and the gas supply unit work intermittently.

## Claims

1. A fuel cell system, comprising: a fuel cell generator (5), a fuel supply unit (6), a gas supply unit (7), a detection unit (8), and a control unit (9); wherein, said fuel supply unit (6) and gas supply unit (7) are connected to the anode inlet and cathode inlet of said fuel cell generator (5) respectively; said detection unit (8) is a current detection device and connected to the two electrodes of said fuel cell generator (5) and is for detecting the discharge current value of said fuel cell generator (5); said control unit (9) is connected to said fuel supply unit (6), gas supply unit (7), and detection unit (8), respectively, and is for controlling fuel supply of said fuel supply unit (6) and gas supply of said gas supply unit (7);
wherein said control unit (9) comprises a signal receiver module, a time decision module, a timing module, a fuel-supply control module and a gas-supply control module;
said signal receiver module is configured to receive the signals from said detection unit (8), determine the discharge current value corresponding to said signals, and send said discharge current value to said time decision module;
said time decision module is configured to decide the scheduled working duration and scheduled idle duration corresponding to the received discharge current value and send the durations to said timing module;
said timing module is configured to perform timing for the working duration and idle duration of said fuel supply unit (6)/gas supply unit (7), and, if the working duration or idle duration of said fuel supply unit (6)/gas supply unit (7) exceeds the scheduled working duration or scheduled idle duration, send a signal to the fuel-supply control module/gas-supply control module, indicating the scheduled working duration or scheduled idle duration has ended; and
said fuel-supply control module and gas-supply control module are configured to control fuel supply of said fuel supply unit (6) and gas supply of said gas supply unit (7) in response to the signal received from said timing module;
wherein said control unit (9) further comprises a second current comparator module, which is configured to judge whether the present discharge current value determined and sent by said signal receiver module is equal to zero; and if the present discharge current value is judged as equal to zero, notify said fuel-supply control module and gas-supply control module to stop fuel supply of said fuel supply unit (6) and gas supply of said gas supply unit (7); if the present discharge current value is judged as not equal to zero, send the present discharge current value to said time decision module.

2. The system as in claim 1, wherein said fuel cell generator (5) is an individual fuel cell or a fuel cell stack.

3. The system as in claim 1, wherein said fuel supply unit (6) comprises a fuel pump (10), a fuel supply tube and a fuel return tube; said fuel supply tube and fuel return tube are connected to the anode inlet of said fuel cell generator (5); said fuel pump (10) is mounted on said fuel supply tube.

4. The system as in claim 1, wherein said gas supply unit (7) comprises a gas pump (11), a gas supply tube and a gas exhaust tube; said gas supply tube and gas exhaust tube are connected to the cathode inlet of said fuel cell generator (5); said gas pump (11) is mounted on said gas supply tube.

5. The system as in claim 1, wherein said timing module is configured to perform timing for the working duration and idle duration of said fuel pump (10); said fuel-supply control module is configured to control the working state of said fuel pump (10); if said fuel-supply control module receives a signal indicating the scheduled working duration has ended, it will stop said fuel pump (10); if said fuel-supply control module receives a signal indicating the scheduled idle duration has ended, it will start said fuel pump (10).

6. The system as in claim 1, wherein said timing module is configured to perform timing for the working duration and idle duration of said gas pump (11); said gas-supply control module is configured to control the working state of said gas pump (11); if said gas-supply control module receives a signal indicating the scheduled working duration has ended, it will stop said gas pump (11); if said fuel-supply control module receives a signal indicating the scheduled idle duration has ended, it will start said gas pump (11).

7. The system as in claim 1, wherein said timing module comprises multiple timers with presetted times, which are designed to perform timing for the working duration and idle duration of said fuel supply unit (6) as well as the working duration and idle duration of said gas supply unit (7); the scheduled working durations and scheduled idle durations decided by said time decision module are used as the presetted times for the timers, so that whenever the time counted by a timer exceeds the scheduled duration, an corresponding signal will be sent, indicating the scheduled working duration/scheduled idle duration has ended; whenever said signal is sent, the timer will reset to zero.

8. The system as in claim 1, wherein said control unit (9) further comprises the first current comparator module, which is configured to judge whether the present discharge current value determined and sent by said signal receiver module is equal to the previous discharge current value; and
If the present discharge current value is judged as different from the previous discharge current value, send the present discharge current value to said time decision module;
If the present discharge current value is judged as equal to the previous discharge current value, maintain the scheduled working duration and scheduled idle duration decided previously by said time decision module.

9. A control method for fuel cell system, comprising the following steps:
step a) detecting the discharge current value of the fuel cell generator (5) in the fuel cell system; and
step b) controlling fuel supply of the fuel supply unit (6) and gas supply of the gas supply unit (7), comprises the following steps:
a signal receiving step, for receiving the detected discharge current value of said fuel cell generator (5) and determining the discharge current value;
a time decision step, for deciding the scheduled working duration and scheduled idle duration corresponding to said discharge current value;
a timing step, for timing for the working time and idle time of said fuel supply unit (6)/gas supply unit (7), and, if the working time or idle time of said fuel supply unit (6)/gas supply unit (7) exceeds a scheduled working duration or scheduled idle duration, notifying a fuel-supply control module/gas-supply control module of the scheduled working duration or scheduled idle duration has ended; and
a fuel-supply control step and a gas-supply control step, for controlling the fuel supply from said fuel supply unit (6) and the gas supply from said gas supply unit (7) respectively in response to the scheduled working duration or idle duration has ended;
wherein, after the signal receiving step, the step b) further comprises the following step:
a second current comparison step, for judging whether the discharge current value determined in the signal receiving step is equal to zero, and, if the discharge current value is equal to zero, notifying said fuel-supply control module and gas-supply control module to stop fuel supply of said fuel supply unit (6) and gas supply of said gas supply unit (7); if the discharge current value is not equal to zero, proceeding to the time decision step.

10. The method as in claim 9, wherein the step b) further comprises the following step:
a first current comparison step, for judging whether the present discharge current value determined in the signal receiving step is equal to the previous discharge current value, and, if the present discharge current value is different from the previous discharge current value, deciding the scheduled working duration and scheduled idle duration corresponding to the present discharge current value in the time decision step; if the present discharge current value is equal to the previous discharge current value, maintaining the scheduled working duration and scheduled idle duration decided previously in the time decision step.

## Patentansprüche

1. Brennstoffzellensystem, das Folgendes umfasst: einen Brennstoffzellengenerator (5), eine Kraftstoffversorgungseinheit (6), eine Gasversorgungseinheit (7), eine Erkennungseinheit (8) und eine Steuereinheit (9), wobei die Kraftstoffversorgungseinheit (6) und die Gasversorgungseinheit (7) jeweils mit dem Anodeneingang und dem Kathodeneingang des Brennstoffzellengenerators (5) verbunden sind, die Erkennungseinheit (8) eine Stromerkennungseinrichtung ist und mit den zwei Elektroden des Brennstoffzellengenerators (5) verbunden ist, zur Erkennung des Entladestromwertes des Brennstoffzellengenerators (5), die Steuereinheit (9) jeweils mit der Kraftstoffversorgungseinheit (6), der Gasversorgungseinheit (7) und der Erkennungseinheit (8) verbunden ist, zur Steuerung der Kraftstoffversorgung der Kraftstoffversorgungseinheit (6) und der Gasversorgung der Gasversorgungseinheit (7);
- wobei die Steuereinheit (9) ein Signal-Empfängermodul, ein Zeit-Entscheidungsmodul, ein Timing-Modul, ein Kraftstoffversorgungssteuermodul und ein Gasversorgungssteuermodul umfasst;
- das Signal-Empfängermodul derart konfiguriert ist, dass dieses Signale von der Erkennungseinheit (8) empfängt, den Entladestromwert entsprechend der Signale bestimmt und den Entladestromwert an das Zeit-Entscheidungsmodul sendet;
- das Zeit-Entscheidungsmodul derart konfiguriert ist, dass dieses die vorgesehene Betriebszeit und die vorgesehene Stillstandszeit entsprechend des empfangenen Entladestromwertes bestimmt und die Zeiten an das Timing-Modul sendet;
- das Timing-Modul derart konfiguriert ist, dass dieses das Timing für die Betriebszeit und die Stillstandszeit der Kraftstoffversorgungseinheit (6) /Gasversorgungseinheit (7) ausführt und falls die Betriebszeit oder die Stillstandszeit der Kraftstoffversorgungseinheit (6) /Gasversorgungseinheit (7) die vorgesehene Betriebszeit oder die vorgesehene Stillstandszeit überschreitet, ein Signal an das Kraftstoffversorgungssteuermodul/Gasversorgungssteuermodul sendet, das das Ende der vorgesehenen Betriebszeit oder der vorgesehenen Stillstandszeit anzeigt; und
- das Kraftstoffversorgungssteuermodul und das Gasversorgungssteuermodul derart konfiguriert sind, dass die Kraftstoffversorgung der Kraftstoffversorgungseinheit (6) und die Gasversorgung der Gasversorgungseinheit (7) in Reaktion auf das von dem Timing-Modul empfangene Signal gesteuert wird;
- wobei die Steuereinheit (9) weiter ein zweites Stromvergleicher-Modul umfasst, das derart konfiguriert ist, dass dieses beurteilt, ob der gegenwärtige Entladestromwert, der durch das Signal-Empfängermodul bestimmt und von diesem gesendet wurde, gleich Null ist und falls der gegenwärtige Entladestromwert als gleich Null beurteilt wird, dem Kraftstöffversoigungssteuerniodul und dem Gasversorgungssteuermodul anzeigt, dass die Kraftstoffversorgung der Kraftstoffversorgungseinheit (6) und die Gasversorgung der Gasversorgungseinheit (7) gestoppt wird und falls der gegenwärtige Entladestromwert als ungleich Null beurteilt wird, den gegenwärtigen Entladestromwert an das Zeit-Entscheidungsmodul gesendet wird.

2. System nach Anspruch 1, wobei der Brennstoffzellengenerator (5) eine einzelne Brennstoffzelle oder ein Brennstoffzellenstack ist.

3. System nach Anspruch 1, wobei die Kraftstoffversorgungseinheit (6) eine Kraftstoffpumpe (10), ein Kraftstoffzuführrohr und ein Kraftstoffrücklaufrohr umfasst, das Kraftstoffzuführrohr und das Kraftstoffrücklaufrohr mit dem Anodeneingang des Brennstoffzellengenerators (5) verbunden ist und die Kraftstoffpumpe (10) an dem Kraftstoffzuführrohr montiert ist.

4. System nach Anspruch 1, wobei die Gasversorgungseinheit (7) eine Gaspumpe (11), ein Gaszuführrohr und ein Abgasrohr umfasst, das Gaszuführrohr und das Abgasrohr mit dem Kathodeneingang des Brennstoffzellengenerators (5) verbunden sind und die Gaspumpe (11) an dem Gaszuführrohr montiert ist.

5. System nach Anspruch 1, wobei das Timing-Modul derart konfiguriert ist, dass dieses das Timing für die Betriebszeit und die Stillstandszeit der Kraftstoffpumpe (10) ausführt, das Kraftstoffversorgungssteuermodul derart konfiguriert ist, dass dieses den Betriebszustand der Kraftstoffpumpe (10) steuert und falls das Kraftstoffversorgungssteuermodul ein Signal empfängt, das das Ende der vorgesehenen Betriebszeit anzeigt, das Kraftstoffversorgungssteuermodul die Kraftstoffpumpe (10) stoppt und falls das Kraftstoffversorgungssteuermodul ein Signal empfängt, das das Ende der vorgesehenen Stillstandszeit anzeigt, das Kraftstoffversorgungssteuermodul die Kraftstoffpumpe (10) startet.

6. System nach Anspruch 1, wobei das Timing-Modul derart konfiguriert ist, dass dieses das Timing für die Betriebszeit und die Stillstandszeit der Gaspumpe (11) ausführt, das Gasversorgungssteuermodul derart konfiguriert ist, dass dieses den Betriebszustand der Gaspumpe (11) steuert und falls das Gasversorgungssteuermodul ein Signal empfängt, das das Ende der vorgesehenen Betriebszeit anzeigt, das Gasversorgungssteuermodul die Gaspumpe (11) stoppt und falls das Gasversorgungssteuermodul ein Signal empfängt, das das Ende der vorgesehenen Stillstandszeit anzeigt, das Gasversorgungssteuermodul die Gaspumpe (11) startet.

7. System nach Anspruch 1, wobei das Timing-Modul mehrere Timer mit definierten Zeiten umfasst, die derart ausgebildet sind, dass diese das Timing für die Betriebszeit und die Stillstandszeit der Kraftstoffversorgungseinheit (6) ausführen sowie die Betriebszeit und die Stillstandszeit der Gasversorgungseinheit (7), die vorgesehenen Betriebszeiten und Stillstandszeiten, die durch das Zeit-Entscheidungsmodul bestimmt wurden, für die eingestellten Zeiten für die Timer benutzt werden, sodass immer wenn die durch einen Timer gezählte Zeit die vorgesehene Zeit überschreitet, ein entsprechendes Signal gesendet wird, das das Ende der vorgesehenen Betriebszeit / der vorgesehenen Stillstandszeit anzeigt und immer wenn das Signal gesendet wird, der Timer auf Null zurückgesetzt wird.

8. System nach Anspruch 1, wobei die Steuereinheit (9) weiter das erste Strom-Komparatormodul umfasst, das derart konfiguriert ist, dass dieses beurteilt, ob der gegenwärtige Entladestromwert, der durch das Signal-Empfängermodul bestimmt und gesendet wurde, gleich dem vorhergehenden Entladestromwert ist und
- falls der gegenwärtige Entladestromwert als unterschiedlich von dem vorhergehenden Entladestromwert beurteilt wird, der gegenwärtige Entladestromwert an das Zeit-Entscheidungsmodul gesendet wird und
- falls der gegenwärtige Entladestromwert gleich dem vorhergehenden Entladestromwert beurteilt wird, die vorgesehene Betriebszeit und die vorgesehene Stillstandszeit beibehalten wird, die zuvor durch das Zeit-Entscheidungsmodul bestimmt wurde.

9. Steuerungsverfahren für Brennstoffzellensysteme, das folgende Schritte umfasst:
Schritt a) Erkennen des Entladestromwertes der Brennstoffzellengenerators (5) in dem Brennstoffzellensystem und
Schritt b) Steuerung der Kraftstoffversorgung der Kraftstoffversorgungseinheit (6) und der Gasversorgung der Gasversorgungseinheit (7), die folgende Schritte umfasst:
- ein Signalempfangsschritt, um den erkannten Entladestromwert des Brennstoffzellengenerators (5) zu empfangen und den Entladestromwert zu bestimmen;
- ein Zeit-Entscheidungsschritt, zur Bestimmung der vorgesehenen Betriebszeit und der vorgesehenen Stillstandszeit entsprechend des Entladestromwertes;
- ein Timing-Schritt, für das Timing der Betriebszeit und der Stillstandszeit der Kraftstoffversorgungseinheit (6) / Gasversorgungseinheit (7) und falls die Betriebszeit oder die Stillstandszeit der Kraftstoffversorgungseinheit (6) / Gasversorgungseinheit (7) eine vorgesehene Betriebszeit oder eine vorgesehene Stillstandszeit überschreitet, Signalisierung an ein Kraftstoffversorgungssteuermodul / Gasversorgungssteuermodule, dass die vorgesehene Betriebszeit oder die vorgesehene Stillstandszeit endete und
- ein Kraftstoffversorgungssteuerungsschritt und ein Gasversorgungssteuerungsschritt, zur Steuerung der Kraftstoffversorgung der Kraftstoffversorgungseinheit (6) und der Gasversorgung der Gasversorgungseinheit (7) in Reaktion auf das Ende der vorgesehenen Betriebszeit oder der Stillstandszeit, wobei nach dem Signalempfangsschritt, der Schritt b) weiter die folgenden Schritte umfasst:
- ein zweiter Stromvergleichsschritt, zur Beurteilung ob der in dem Signalempfangs-Schritt bestimmte Entladestromwert gleich Null ist und, falls der Entladestromwert gleich Null ist, Signalisierung an das Kraftstoffversorgungssteuermodul und das Gasversorgungssteuermodul, dass die Kraftstoffversorgung der Kraftstoffversorgungseinheit (6) und die Gasversorgung der Gasversorgungseinheit (7) gestoppt wird; falls der Entladestromwert ungleich Null ist, wird mit dem Zeit-Entscheidungsschritt fortgefahren.

10. Verfahren nach Anspruch 9, wobei der Schritt b) weiter den folgenden Schritt umfasst:
ein erster Stromvergleichsschritt, zur Beurteilung ob der in dem Signalempfangssschritt bestimmte gegenwärtige Entladestromwert gleich dem vorhergehenden Entladestromwert ist und, falls der gegenwärtige Entladestromwert unterschiedlich von dem vorhergehenden Entladestromwert ist, Bestimmung der vorgesehenen Betriebszeit und der vorgesehenen Stillstandszeit entsprechend des gegenwärtigen Entladestromwertes in dem Zeit-Entscheidungsschritt und falls der gegenwärtige Entladestromwert gleich dem vorhergehenden Entladestromwert ist, Beibehaltung der in dem vorher bestimmten Zeit-Entscheidungsschritt vorgesehenen Betriebszeit und der Stillstandszeit.

## Revendications

1. Système de pile à combustible comprenant : un générateur de pile à combustible (5), une unité d'alimentation de combustible (6), une unité d'alimentation de gaz (7), une unité de détection (8) et une unité de contrôle (9) ; dans lequel ladite unité d'alimentation de combustible (6) et l'unité d'alimentation de gaz (7) sont raccordées à une entrée d'anode et à une entrée de cathode dudit générateur de pile à combustible (5) respectivement ; ladite unité de détection (8) est un dispositif de détection de courant et est raccordée aux deux électrodes dudit générateur de pile à combustible (5) et est prévue pour détecter la valeur de courant de décharge dudit générateur de pile à combustible (5) ; ladite unité de contrôle (9) est raccordée à ladite unité d'alimentation de combustible (6), à l'unité d'alimentation de gaz (7) et à l'unité de détection (8) respectivement, et est prévue pour contrôler l'alimentation de combustible de ladite unité d'alimentation de combustible (6) et l'alimentation de gaz de ladite unité d'alimentation de gaz (7) ;
dans lequel ladite unité de contrôle (9) comprend un module de réception de signal, un module de décision de temps, un module de temporisation, un module de contrôle d'alimentation de combustible et un module de contrôle d'alimentation de gaz ;
ledit module de réception de signal est configuré pour recevoir les signaux de ladite unité de détection (8), déterminer la valeur de courant de décharge correspondant auxdits signaux, et envoyer ladite valeur de courant de décharge audit module de décision de temps ;
ledit module de décision de temps est configuré pour déterminer la durée de travail programmée et la durée de ralenti programmée correspondant à la valeur de courant de décharge reçue et envoyer les durées audit module de temporisation ;
ledit module de temporisation est configuré pour réaliser la temporisation pour la durée de travail et la durée de repos de ladite unité d'alimentation de combustion (6) / unité d'alimentation de gaz (7), et, si la durée de travail ou la durée de repos de ladite unité d'alimentation de combustible (6) / unité d'alimentation de gaz (7) dépasse la durée de travail programmée ou la durée de repos programmée, envoyer un signal audit module de contrôle d'alimentation de combustible / module de contrôle d'alimentation de gaz, indiquant que la durée de travail programmée ou la durée de repos programmée s'est terminée ; et
ledit module de contrôle d'alimentation de combustible et le module de contrôle d'alimentation de gaz sont configurés pour contrôler l'alimentation de combustible de ladite unité d'alimentation de combustible (6) et l'alimentation de gaz de ladite unité d'alimentation de gaz (7) en réponse au signal reçu dudit module de temporisation ;
dans lequel ladite unité de contrôle (9) comprend en outre un deuxième module de comparaison de courant qui est configuré pour décider si la valeur de courant de décharge présente déterminée et envoyée par ledit module de réception de signal est égale à zéro ; et si la valeur de courant de décharge présente est jugée comme étant égale à zéro, notifier audit module de contrôle d'alimentation de combustible et au module de contrôle d'alimentation de gaz d'arrêter l'alimentation de combustible de ladite unité d'alimentation de combustible (6) et l'alimentation de gaz de ladite unité d'alimentation de gaz (7) ; si la valeur de courant de décharge présente est jugée comme n'étant pas égale à zéro, envoyer la présente valeur de courant de décharge audit module de décision de temps.

2. Système selon la revendication 1, dans lequel ledit générateur de pile à combustible (5) est une pile à combustible individuelle ou un empilement de piles à combustible.

3. Système selon la revendication 1, dans lequel ladite unité d'alimentation de combustible (6) comprend une pompe à combustible (10), un tube d'alimentation de combustible et un tube de retour de combustible ; lesdits tube d'alimentation de combustible et tube de retour de combustible sont raccordés à l'entrée d'anode dudit générateur de pile à combustible (5) ; ladite pompe à combustible (10) est montée sur ledit tube d'alimentation de combustible.

4. Système selon la revendication 1, dans lequel ladite unité d'alimentation de gaz (7) comprend une pompe de gaz (11), un tube d'alimentation de gaz et un tube d'échappement de gaz ; lesdits tube d'alimentation de gaz et tube d'échappement de gaz sont raccordés à l'entrée de cathode dudit générateur de pile à combustible (5) ; ladite pompe de gaz (11) est montée sur ledit tube d'alimentation de gaz.

5. Système selon la revendication 1, dans lequel ledit module de temporisation est configuré pour réaliser la temporisation pour la durée de travail et la durée de repos de ladite pompe à combustible (10) ; ledit module de contrôle d'alimentation de combustible est configuré pour contrôler l'état de travail de ladite pompe à combustible (10) ; si ledit module de contrôle d'alimentation de combustible reçoit un signal indiquant que la durée de travail programmée s'est terminée, il arrête ladite pompe à combustible (10) ; si ledit module de contrôle d'alimentation de combustible reçoit un signal indiquant que la durée de repos programmée s'est terminée, il démarre ladite pompe à combustible (10).

6. Système selon la revendication 1, dans lequel ledit module de temporisation est configuré pour réaliser la temporisation pour la durée de travail et la durée de repos de ladite pompe de gaz (11) ; ledit module de contrôle d'alimentation de gaz est configuré pour contrôler l'état de travail de ladite pompe de gaz (11) ; si ledit module de contrôle d'alimentation de gaz reçoit un signal indiquant que la durée de travail programmée s'est terminée, il arrête ladite pompe de gaz (11) ; si ledit module de contrôle d'alimentation de combustible reçoit un signal indiquant que la durée de repos programmée s'est terminée, il démarre ladite pompe de gaz (11).

7. Système selon la revendication 1, dans lequel ledit module de temporisation comprend plusieurs temporisateurs avec des temps prédéterminés, qui sont conçus pour réaliser la temporisation pour la durée de travail et la durée de repos de ladite unité d'alimentation de combustible (6) ainsi que la durée de travail et la durée de repos de ladite unité d'alimentation de gaz (7) ; les durées de travail programmées et les durées de repos programmées décidées par ledit module de décision de temps sont utilisées en tant que temps prédéterminés pour les temporisateurs, de sorte que chaque fois que le temps décompté par un temporisateur dépasse la durée programmée, un signal correspondant est envoyé, indiquant que la durée de travail programmée / durée de repos programmée s'est terminée ; chaque fois que ledit signal est envoyé, le temporisateur est remis à zéro.

8. Système selon la revendication 1, dans lequel ladite unité de commande (9) comprend en outre le premier module de comparaison de courant, qui est configuré pour déterminer si la présente valeur de courant de décharge déterminée et envoyée par ledit module de réception de signal est égale à la précédente valeur de courant de décharge ; et
si la présente valeur de courant de décharge est jugée comme étant différente de la précédente valeur de courant de décharge, envoyer la présente valeur de courant de décharge audit module de décision de temps ;
si la présente valeur de courant de décharge est jugée comme étant égale à la précédente valeur de courant de décharge, maintenir la durée de travail programmée et la durée de repos programmée décidées préalablement par ledit module de décision de temps.

9. Procédé de contrôle pour un système de pile à combustible, comprenant les étapes suivantes consistant à :
étape a) détecter la valeur de courant de décharge du générateur de pile à combustible (5) dans le système de pile à combustible ; et
étape b) contrôler l'alimentation de combustible de l'unité d'alimentation de combustible (6) et l'alimentation de gaz de l'unité d'alimentation de gaz (7), comprenant les étapes suivantes consistant à :
une étape de réception de signal, consistant à recevoir la valeur courante de décharge détectée dudit générateur de pile à combustible (5) et déterminer la valeur de courant de décharge ;
une étape de décision de temps, consistant à décider la durée de travail programmée et la durée de repos programmée correspondant à ladite valeur de courant de décharge ;
une étape de temporisation, consistant à déterminer la temporisation pour le temps de travail et le temps de repos de ladite unité d'alimentation de combustible (6)/unité d'alimentation de gaz (7), et si le temps de travail ou le temps de repos de ladite unité d'alimentation de combustible (6) / unité d'alimentation de gaz (7) dépasse une durée de travail programmée ou une durée de repos programmée, notifier un module de contrôle d'alimentation de combustible /module de contrôle d'alimentation de gaz que la durée de travail programmée ou la durée de repos programmée s'est terminée ; et
une étape de contrôle d'alimentation de combustible et une étape de contrôle d'alimentation de gaz, consistant à contrôler l'alimentation de combustible de ladite unité d'alimentation de combustible (6) et ladite alimentation de gaz de ladite unité d'alimentation de gaz (7) respectivement en réponse au fait que la durée de travail programmée ou la durée de repos s'est terminée ;
dans lequel, après l'étape de réception de signal, l'étape b) comprend en outre l'étape suivante consistant à :
une deuxième étape de comparaison de courant, consistant à déterminer si la valeur de courant de décharge déterminée à l'étape de réception de signal est égale à zéro, et si la valeur de courant de décharge est égale à zéro, notifier ledit module de contrôle d'alimentation de combustible et le module de contrôle d'alimentation de gaz d'arrêter l'alimentation de combustible de l'unité d'alimentation de combustible (6) et l'alimentation de gaz de ladite unité d'alimentation de gaz (7) ; si la valeur de courant de décharge n'est pas égale à zéro, procéder à l'étape de décision de temps.

10. Procédé selon la revendication 9, dans lequel l'étape b) comprend en outre l'étape suivante consistant à :
une première étape de comparaison de courant, consistant à juger si la présente valeur de courant de décharge déterminée à l'étape de réception de courant est égale à la précédente valeur de courant de décharge, et si la présente valeur de courant de décharge est différente de la précédente valeur de courant de décharge, décider que la durée de travail programmée et la durée de repos programmée correspondent à la présente valeur de courant de décharge à l'étape de décision de temps ; si la présente valeur de courant de décharge est égale à la précédente valeur de courant de décharge, maintenir la durée de travail programmée et la durée de repos programmée décidées préalablement à l'étape de décision de temps.
